# EUROPEAN PATENT SPECIFICATION

(11) **EP 1 343 241 B1**
(45) Date of publication and mention of the grant of the patent: **11.11.2009**
(21) Application number: 02388018.0
(22) Date of filing: 04.03.2002
(51) Int. Cl.: H02J 7/00

(54) **A battery protection circuit**
Batterieschutzschaltung
Circuit de protection de batterie

(43) Date of publication of application: 10.09.2003
(73) Proprietor: TELEFONAKTIEBOLAGET LM ERICSSON (publ), 164 83 Stockholm (SE)
(72) Inventor: Svensson, Jan-Olof, 261 63 Glumslöv Landskrona (SE); Wolf, Mats Erik, 247 35 Södra Sandby (SE)
(74) Representative: Boesen, Johnny Peder

(56) References cited:
- DE-A- 19 533 537
- US-A- 5 477 124
- US-A- 5 731 686
- US-A- 5 789 902
- US-A- 6 118 253
- US-B2- 6 346 795

## Description

### Technical Field of the Invention

The invention relates to a power supply arrangement for supplying power from a battery to an electric load, said arrangement comprising a controlled switch having a first state in which a connection is provided from the battery to the load, and a second state in which the load is disconnected from the battery; and control circuitry for controlling the state of the controlled switch. The invention further relates to a method of protecting a battery from over discharge.

### Description of Related Art

Many portable electronic devices, such as laptop computers, mobile telephones or camcorders, are powered by rechargeable batteries, either as the only power source or as a back-up for power supplies connected to main power lines.

Such batteries or battery packs are to an increasing degree based on lithium-ion (Li-ion) or lithium-polymer (Li-polymer) cells due to their overall superior performance characteristics, such as a higher energy density with an ensuing lower weight of a given battery capacity. However, these batteries need safety electronics to protect them from being overcharged and over-discharged. The overcharge protection is needed for safety reasons (explosion danger), while the over-discharge protection is needed for preventing a cell from being discharged below a certain voltage level causing an irreversible loss of capacity so that the battery can no longer be charged to its original capacity.

Recent developments in Li-battery solutions seem to make the overcharge protection less important, while the over-discharge protection is still needed. Further, it should be noted that also battery types other than Li-batteries need to be protected from over-discharge.

Several circuits protecting batteries from being over-discharged are known in the art.

US 5 790 961 shows a power control circuit allowing powering down a battery operated device, such as a portable radio transceiver, to prevent deep discharging of a battery even though an on/off switch is in the "on" position. The power control circuit includes power level monitoring circuit elements for monitoring a level of voltage output from a battery connected to a load, i.e. the radio transceiver, and an electronic switch such as a latch for controlling the disable function of the power supply when the voltage level of the battery is below a threshold voltage. Thus the electrical load and the current drain corresponding thereto is disconnected from the battery when the battery voltage falls below the threshold voltage. However, the power control circuit itself, which is still connected to the battery, has a certain leakage current, and therefore the battery will continue to be discharged by this leakage current even after the load has been disconnected. Sooner or later this will lead to over-discharge of the battery. Although the leakage current is characterized as negligible in the document, this is not the case for Li-batteries. Due to its own leakage current this power control circuit is not sufficient to prevent the battery from being over-discharged.

Similar circuits are known from US 5 729 061 and EP 458 716, and these circuits suffer from the same disadvantage, i.e. the leakage current of the control circuits continues to discharge the battery even after the load has been disconnected, and thus the circuits are not sufficient to prevent the battery from being over-discharged.

One solution to this problem is suggested in EP 843 396, in which the discharge of a Li-ion battery caused by the leakage current of the control circuit is compensated by a primary battery, which is connected through one or more diodes in parallel to the Li-ion battery as a buffer. The diodes and the voltage of the primary battery are selected so that the voltage of the Li-ion battery is kept above the voltage level causing an irreversible loss of capacity, until also the primary battery is discharged. However, this solution does not eliminate the leakage current of the control circuit, it just compensates by delivering this current from the buffer instead of the Li-ion battery. Further an extra battery, i.e. the primary cell, is needed for this sole purpose, and since it is a primary battery it is difficult to know whether any charge is actually left in the battery when it is needed. The battery may have been discharged at an earlier occasion in which case the Li-ion battery is not protected from over-discharge.

US 5 477 124 shows a circuit preventing excessive discharge of a rechargeable battery. A voltage detector and a comparator controlling a MOSFET switch connected between the battery and the load are connected to the battery through a separate MOSFET switch.

Therefore, it is an object of the invention to provide a solution in which a battery is prevented from being discharged by the leakage current of the control circuit while the electric load is disconnected from the battery.

### Summary

The object of the invention according to claim 1.

By disconnecting not only the electrical load, but also the control circuitry from the battery, it is ensured that this circuitry cannot draw any leakage current from the battery, when the load is switched off. This means that no over-discharge protection is needed in the battery itself, which saves costs and also leads to a greater flexibility in the system design phase since the battery can be treated as an independent unit.

In one embodiment a switch arranged to be operated manually is provided in parallel to the controlled switch. This parallel-coupled switch enables the control circuit to be powered up and bring the controlled switch to its first state in which the load and the control circuit are connected to the battery through that switch. Thus the parallel-coupled switch functions as an "on" switch.

Alternatively, a back-up power storage for supplying power to the control circuitry, when the controlled switch is in its second state, is provided. This power storage could be e.g. a capacitor or a small battery. This power storage enables the control circuit to be powered up and bring the controlled switch to its first state in which the load and the control circuit are connected to the battery through that switch, when the load is intended to be switched on.

In one embodiment the controlled switch comprises a Field Effect Transistor, in which case a simple control circuit can be used. The controlled switch may also be implemented as a disable switch of a voltage regulator. Another possibility could be a semiconductor relay.

When the control circuitry comprises means for monitoring the battery voltage and switching said controlled switch to its second state when a voltage below a predefined reference value is detected, the control circuitry can automatically disconnect the load and the control circuitry itself from the battery when the battery voltage approaches the voltage level causing an irreversible loss of capacity.

In an expedient embodiment the power supply arrangement is arranged to supply power to a mobile telephone.

As mentioned, the invention further relates to a method of protecting a battery from over discharge, said battery being connected through a controlled switch to an electric load under control of control circuitry, said controlled switch having a first state in which a connection is provided from the battery to the load, and wherein the load is disconnected from the battery by bringing the controlled switch to a second state. When the method comprises the step of disconnecting the control circuitry from the battery when the controlled switch is in its second state, it is ensured that the control circuitry cannot draw any leakage current from the battery, when the load is switched off. This means that no over-discharge protection is needed in the battery itself, which saves costs and also leads to a greater flexibility in the system design phase since the battery can be treated as an independent unit.

In one embodiment the method comprises the step of providing a switch arranged to be operated manually in parallel to the controlled switch. This parallel-coupled switch enables the control circuit to be powered up and bring the controlled switch to its first state in which the load and the control circuit are connected to the battery through that switch. Thus the parallel-coupled switch functions as an "on" switch.

Alternatively, the method comprises the step of supplying power from a back-up power storage to the control circuitry, when the controlled switch is in its second state. This power storage could be e.g. a capacitor or a small battery. This power storage enables the control circuitry to be powered up and bring the controlled switch to its first state in which the load and the control circuitry are connected to the battery through that switch, when the load is intended to be switched on.

When the method comprises the steps of monitoring the battery voltage, and switching said controlled switch to its second state when a voltage below a predefined reference value is detected, the load and the control circuitry can automatically be disconnected from the battery when the battery voltage approaches the voltage level causing an irreversible loss of capacity.

### Brief Description of the Drawings

The invention will now be described more fully below with reference to the drawings, in which
figure 1 shows a known control circuit for a battery,
figure 2 shows an improved circuit in which the circuitry can be fully disconnected from the battery,
figure 3 shows a control circuit having a back-up battery,
figure 4 shows a control circuit in which a controlled switch is implemented as a Field Effect Transistor, and
figure 5 shows a control circuit in which a controlled switch is implemented as a voltage regulator with a disable input terminal.

### Detailed Description of Embodiments

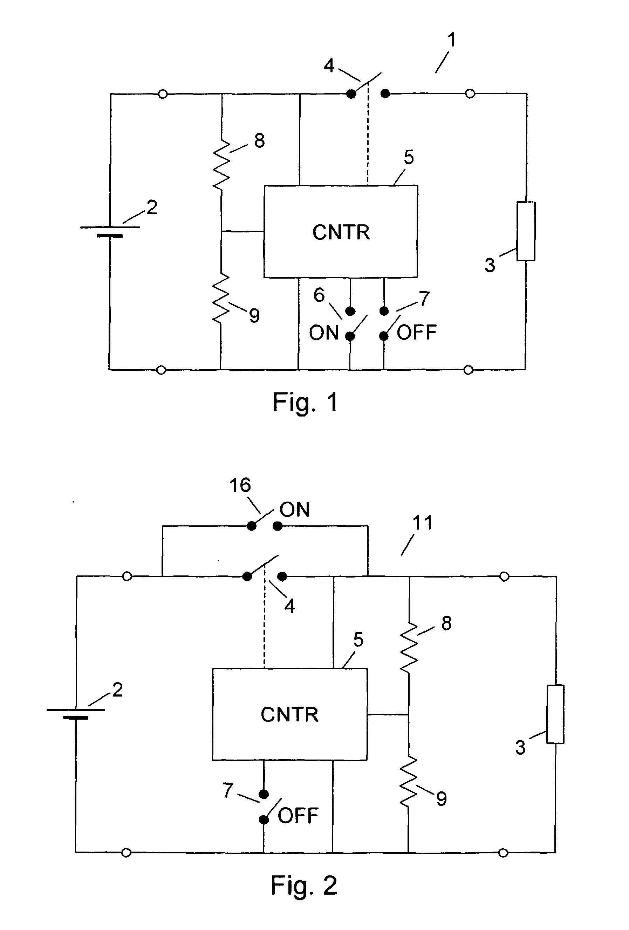

Figure 1 shows an example of a known control system 1 for a battery 2. The battery 2 could, as an example, be a Li-ion or Li-polymer battery, and it is arranged for supplying power to a load 3, which represents an electronic device, such as a computer, a mobile telephone, or a camcorder. A controlled switch 4 connects and disconnects the battery 2 to and from the load 3, and it is controlled by the control circuit 5. Two manually operated switches 6 and 7 are used for switching the controlled switch 4 on and off. An activation of the "on" switch 6 causes the control circuit 5 to close the controlled switch 4 so that power is supplied from the battery 2 to the load 3. Correspondingly, an activation of the "off' switch 7 causes the control circuit 5 to open the controlled switch 4 so that the battery 2 is disconnected from the load 3. The switches 6 and 7 may also be combined to one "on/off' switch.

Resistors 8 and 9 form a voltage divider providing an input voltage to the control circuit 5 which is proportional to the output voltage of the battery 2. When the input voltage, and thus the output voltage of the battery 2, falls to a value below a preset reference value the control circuit 5 opens the controlled switch, even if the use of the switch 6 has instructed the control circuit 5 to close the controlled switch 4. The intention with this is to prevent the battery 2 from being over-discharged, and therefore the reference value is selected so that the controlled switch is opened before the battery voltage reaches the voltage level where over-discharge occurs. It is noted that the voltage divider formed by the resistors 8 and 9 is only an example of how a voltage indicating the battery voltage can be provided to the control circuit 5. The battery voltage may also be connected directly or through other types of circuitry to the control circuit 5.

The controlled switch 4 can be implemented in different ways. Examples of such implementations include a Field Effect Transistor, a disable switch of a voltage regulator, or a semiconductor relay, Some of these implementations will be described in more detail later. Also the control circuit 5 may be implemented in different ways. One implementation is a micro-controller or a microprocessor programmed to carry out these functions, but it may also be implemented by means of discrete electronic components. Physically the control circuit can be a separate unit, or it may be integrated together with either the battery 2 or the electronic device 3. It may also be divided so that the parts controlling the on/off function are integrated with the device 3, while the parts disconnecting the battery from the load when the battery voltage is too low are integrated in the battery 2.

As mentioned, the intention of the above protection circuit is to prevent the battery 2 from being over-discharged. However, the resistors 8 and 9 and the control circuit itself will still draw a certain leakage current from the battery 2, and this causes the battery voltage to continue to decrease. Although the leakage current is normally a very small current, and the battery voltage thus decreases only slowly, it is just a question of time before the battery voltage reaches the critical level for over-discharge.

A circuit 11 according to the invention is illustrated in figure 2. As can be seen, most components are similar to those of figure 1. However, the control circuit 5 and the voltage divider provided by the resistors 8 and 9 are no longer connected directly to the battery 2. They are now connected to the secondary side of the controlled switch 4, so that when this switch is open, the control circuit and the voltage divider are completely disconnected from the battery. In this way the leakage current drawn by these components from the battery during the off state of the device 3 is avoided. In order to be able to switch on the device after a switched-off period a manually operated "on" switch 16 is provided in parallel to the controlled switch 4 instead of the "on" switch 6 in figure 1. From the "off' state a user wishing to switch on the device presses switch 16 which, as long as it is pressed, connects power from the battery 2 to the control circuit 5 and the load 3. The control circuit 5 then closes the controlled switch 4, and the switch 16 can be released again. The device 3 is now in its "on" state.

When the user wishes to shut down the device again, he activates the "off' switch 7 as in figure 1, and the control circuit 5 disconnects the load 3 and the control circuit 5 from the battery 2 by opening the controlled switch 4. The same happens if the voltage of the battery 2 and thus the output voltage of the voltage divider decrease due to the discharge of the battery 2 to a value below the preset reference value. In both cases the controlled switch 4 disconnects not only the load 3 but also the control circuit 5 and the voltage divider from the battery 2, thus ensuring that a leakage current to these components will not continue to discharge the battery 2 with the effect of the battery being eventually over-discharged.

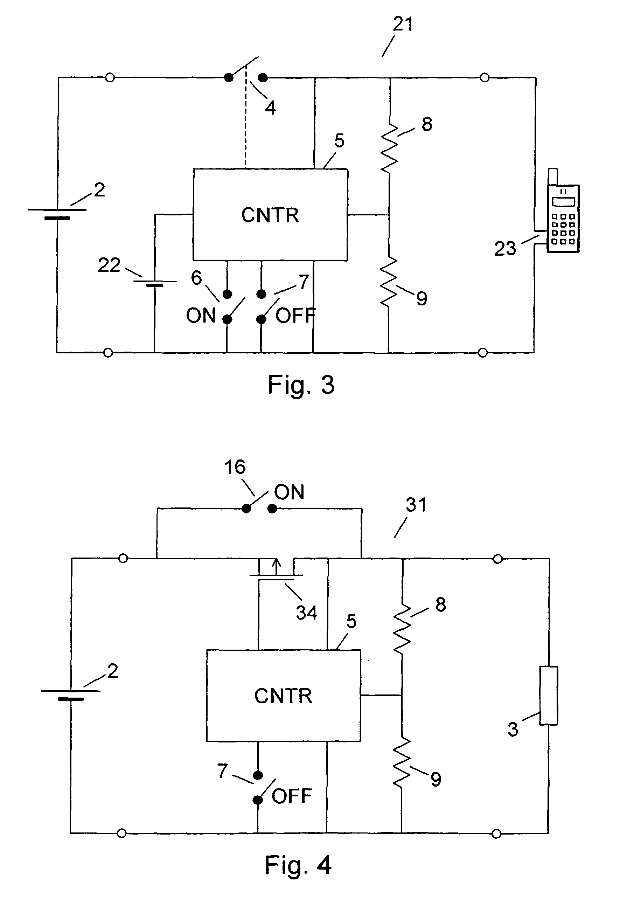

An alternative implementation is shown as the circuit 21 in figure 3. Here a back-up battery 22 is provided for supplying power to the control circuit 5 during the off state of the load. In this way the "on" switch 16 in parallel to the controlled switch can be avoided and a normal "on" switch 6 can be used similar to figure 1, because the control circuit is ready to detect the operation of the "on" switch 6 even during the off periods of the load. The current drawn by the control circuit 5 in the off state is very small, and thus the back-up battery 22 can be a very small battery, i.e. a battery having a small capacity. It can even be a capacitor which is charged during the on periods.
Figure 3 also shows that an example of the load can be a mobile telephone 23. As mentioned above, the load can also represent other types of electronic devices, such as computers or camcorders.

Figure 4 shows that the controlled switch 4 of figure 2 may be implemented in the form of a Field Effect Transistor 34, as is the case in the circuit 31. The source terminal of the FET 34 is connected to the battery 2 while the drain terminal is connected to the load. The gate terminal of the FET 34 is controlled by the control circuit 5. A low voltage to the gate terminal keeps the FET on while a high voltage turns the FET off.

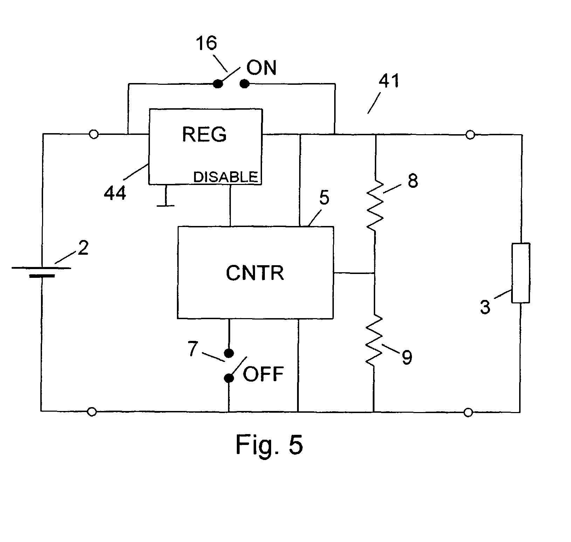

An alternative implementation of the controlled switch 4 is shown in figure 5. Here the switch is represented by a voltage regulator 44 having a disable input terminal. The voltage regulator is turned off by a high voltage on the disable input terminal, while a low voltage turns the regulator on. The regulator 44 is arranged to provide a regulated voltage (e.g. 5 Volts) corresponding to the supply voltage needed by the load 3. Such regulators are well known and will not be described in further detail here. In all other respects the circuit 41 is similar to the circuits described above.

Although a preferred embodiment of the present invention has been described and shown, the invention is not restricted to it, but may also be embodied in other ways within the scope of the subject-matter defined in the following claims.

## Claims

1. A power supply arrangement for supplying power from a battery (2) to an electric load (3; 23), said arrangement comprising:
• a controlled switch (4; 34; 44) having a first state in which a connection is provided from the battery (2) to the load (3; 23), and a second state in which the load (3; 23) is disconnected from the battery (2), and
• control circuitry (5, 8, 9) for controlling the state of the controlled switch (4; 34; 44),
**characterized in that** the control circuitry (5, 8, 9) is connected to the secondary side of the controlled switch (4; 34; 44) so that the control circuitry (5,8,9) is completely disconnected from the battery (2) when the controlled switch (4; 34; 44) is in its second state.

2. A power supply arrangement according to claim 1, **characterized in that** a switch (16) arranged to be operated manually is provided in parallel to the controlled switch (4; 34; 44).

3. A power supply arrangement according to claims 1, **characterized in that** a back-up power storage (22) for supplying power to the control circuitry (5, 8, 9), when the controlled switch (4; 34; 44) is in its second state, is provided.

4. A power supply arrangement according to any one of claims 1 to 3, **characterized in that** the controlled switch comprises a Field Effect Transistor (34).

5. A power supply arrangement according to any one of claims 1 to 4, **characterized in that** the controlled switch is implemented as a disable switch of a voltage regulator (44).

6. A power supply arrangement according to any one of claims 1 to 5, **characterized in that** the control circuitry (5, 8, 9) comprises means (8, 9) for monitoring the battery voltage and switching said controlled switch (4; 34; 44) to its second state when a voltage below a predefined reference value is detected.

7. A power supply arrangement according to any one of claims 1 to 6, **characterized in that** it is arranged to supply power to a mobile telephone (23).

8. A method of protecting a battery (2) from over-discharge,
• said battery (2) being connected through a controlled switch (4; 34; 44) to an electric load (3; 23) under control of control circuitry (5, 8, 9), said controlled switch (4; 34; 44) having a first state in which a connection is provided from the battery (2) to the load (3; 23),
• and wherein the load (3; 23) is disconnected from the battery (2) by bringing the controlled switch (4; 34; 44) to a second state,
**characterized in that** the method comprises the step of connecting the control circuitry (5, 8, 9) to the secondary side of the controlled switch (4; 34; 44) so that the control circuitry (5, 8, 9) is completely disconnected from the battery (2) when the controlled switch (4; 34; 44) is in its second state.

9. A method according to claim 8, **characterized in that** the method comprises the step of providing a switch (16) arranged to be operated manually in parallel to the controlled switch (4; 34; 44).

10. A method according to claim 8, **characterized in that** the method comprises the step of supplying power from a back-up power storage (22) to the control circuitry (5, 8, 9), when the controlled switch (4; 34; 44) is in its second state.

11. A method according to any one of claims 8 to 10, **characterized in that** the method comprises the steps of monitoring the battery voltage, and switching said controlled switch (4; 34; 44) to its second state when a voltage below a predefined reference value is detected.

## Patentansprüche

1. Leistungsversorgungsanordnung zum Zuführen von Leistung von einer Batterie (2) zu einer elektrischen Last (3; 23); wobei die Anordnung umfasst:
- einen gesteuerten Schalter (4; 34, 44) mit einem ersten Zustand, in dem eine Verbindung von der Batterie (2) zu der Last (3; 23) bereitgestellt ist, und einem zweiten Zustand, in dem die Last (3; 23) von der Batterie (2) getrennt ist, und
- eine Steuerschaltung (5, 8, 9) zum Steuern des Zustandes des gesteuerten Schalters (4; 34, 44),
**dadurch gekennzeichnet, dass** die Steuerschaltung (5, 8, 9) mit der Sekundärseite des gesteuerten Schalters (4; 34, 44) derart verbunden ist, dass die Steuerschaltung (5, 8, 9) vollständig von der Batterie (2) getrennt ist, wenn der gesteuerte Schalter (4; 34, 44) sich in seinem zweiten Zustand befindet.

2. Leistungsversorgungsanordnung nach Anspruch 1, **dadurch gekennzeichnet, dass** ein Schalter (16), der angeordnet ist, manuell betrieben zu werden, parallel zu dem gesteuerten Schalter (4; 34, 44) bereitgestellt ist.

3. Leistungsversorgungsanordnung nach Anspruch 1, **dadurch gekennzeichnet, dass** ein Ersatzleistungsspeicher (22) zum Zuführen von Leistung zu der Steuerschaltung (5, 8, 9) bereitgestellt ist, wenn der gesteuerte Schalter (4; 34, 44) sich in dem zweiten Zustand befindet.

4. Leistungsversorgungsanordnung nach einem der Ansprüche 1 bis 3, **dadurch gekennzeichnet, dass** der gesteuerte Schalter einen Feldeffekttransistor (34) umfasst.

5. Leistungsversorgungsanordnung nach einem der Ansprüche 1 bis 4, **dadurch gekennzeichnet, dass** der gesteuerte Schalter als ein Ausschalter eines Spannungsreglers (44) bereitgestellt ist.

6. Leistungsversorgungsanordnung nach einem der Ansprüche 1 bis 5, **dadurch gekennzeichnet, dass** die Steuerschaltung (5, 8, 9) eine Vorrichtung (8, 9) zum Überwachen der Batteriespannung und Schalten des gesteuerten Schalters (4; 34, 44) in seinen zweiten Zustand umfasst, wenn eine Spannung unter einem vorbestimmten Referenzwert erfasst wird.

7. Leistungsversorgungsanordnung nach einem der Ansprüche 1 bis 6, **dadurch gekennzeichnet, dass** diese angeordnet ist, eine Leistung zu einem Mobiltelefon (23) zuzuführen.

8. Verfahren eines Schützens einer Batterie (2) vor einer Überentladung,
- wobei die Batterie (2) durch einen gesteuerten Schalter (4; 34, 44) mit einer elektrischen Last (3; 23) unter Steuerung einer Steuerschaltung (5, 8, 9) verbunden ist, wobei der gesteuerte Schalter (4; 34, 44) einen ersten Zustand aufweist, in dem eine Verbindung von der Batterie (2) zu der Last (3; 23) bereitgestellt ist,
- und wobei die Last (3; 23) von der Batterie (2) durch Bringen des gesteuerten Schalters (4; 34, 44) in einen zweiten Zustand getrennt wird,
**dadurch gekennzeichnet, dass** das Verfahren den Schritt eines Verbindens der Steuerschaltung (5, 8, 9) mit der Sekundärseite des gesteuerten Schalters (4; 34, 44) derart umfasst, dass die Steuerschaltung (5, 8, 9) vollständig von der Batterie (2) getrennt wird, wenn der gesteuerte Schalter (4; 34, 44) sich in seinem zweiten Zustand befindet.

9. Verfahren nach Anspruch 8, **dadurch gekennzeichnet, dass** das Verfahren den Schritt eines Bereitstellen eines Schalters (16) umfasst, der angeordnet ist, manuell parallel zu dem gesteuerten Schalter (4; 34, 44) betrieben zu werden.

10. Verfahren nach Anspruch 8, **dadurch gekennzeichnet, dass** das Verfahren den Schritt eines Zuführens einer Leistung von einem Ersatzleistungsspeicher (22) zu der Steuerschaltung (5, 8, 9) umfasst, wenn sich der gesteuerte Schalter (4; 34, 44) in seinem zweiten Zustand befindet.

11. Verfahren nach einem der Ansprüche 8 bis 10, **dadurch gekennzeichnet, dass** das Verfahren die Schritte eines Überwachens der Batteriespannung und eines Schaltens des gesteuerten Schalters (4; 34, 44) in seinen zweiten Zustand umfasst, wenn eine Spannung unter einem vordefinierten Referenzwert erfasst wird.

## Revendications

1. Agencement d'alimentation électrique, destiné à fournir une alimentation électrique à une charge électrique (3 ; 23) à partir d'une batterie (2), ledit agencement comprenant :
un commutateur asservi (4 ; 34 ; 44) ayant un premier état dans lequel une connexion est établie entre la batterie (2) et la charge (3 ; 23) et un second état dans lequel la charge (3 ; 23) est déconnectée de la batterie (2) ; et
un ensemble de circuits de commande (5, 8, 9) destiné à commander l'état du commutateur asservi (4 ; 34 ; 44) ;
**caractérisé en ce que** l'ensemble de circuits de commande (5, 8, 9) est connecté au côté secondaire du commutateur asservi (4 ; 34 ; 44), si bien que l'ensemble de circuits de commande (5, 8, 9) est totalement déconnecté de la batterie (2) lorsque le commutateur asservi (4 ; 34 ; 44) est dans son second état.

2. Agencement d'alimentation électrique selon la revendication 1, **caractérisé en ce qu'**un commutateur (16), conçu pour être manoeuvré manuellement, est monté en parallèle avec le commutateur asservi (4 ; 34 ; 44).

3. Agencement d'alimentation électrique selon la revendication 1, **caractérisé en ce qu'**il est prévu un accumulateur électrique de secours (22) destiné à fournir une alimentation à l'ensemble de circuits de commande (5, 8, 9) lorsque le commutateur asservi (4 ; 34 ; 44) est dans son second état.

4. Agencement d'alimentation électrique selon l'une quelconque des revendications 1 à 3, **caractérisé en ce que** le commutateur asservi comprend un transistor à effet de champ (34).

5. Agencement d'alimentation électrique selon l'une quelconque des revendications 1 à 4, **caractérisé en ce que** le commutateur asservi est mis en oeuvre sous la forme d'un commutateur d'inhibition d'un régulateur de tension (44).

6. Agencement d'alimentation électrique selon l'une quelconque des revendications 1 à 5, **caractérisé en ce que** l'ensemble de circuits de commande (5, 8, 9) comprend un moyen (8, 9) destiné à surveiller la tension de la batterie et à commuter ledit commutateur asservi (4 ; 34 ; 44) dans son second état lorsqu'est détectée une tension inférieure à une valeur de référence prédéfinie.

7. Agencement d'alimentation électrique selon l'une quelconque des revendications 1 à 6, **caractérisé en ce qu'**il est conçu pour fournir une alimentation électrique à un téléphone mobile (23).

8. Procédé de protection d'une batterie contre une décharge excessive,
ladite batterie (2) étant connectée à une charge électrique (3 ; 23) par un commutateur asservi (4 ; 34 ; 44) commandé par un ensemble de circuits de commande (5, 8, 9), ledit commutateur asservi (4 ; 34 ; 44) ayant un premier état dans lequel une connexion est établie entre la batterie (2) et la charge (3 ; 23) ; et
la charge (3 ; 23) étant déconnectée de la batterie en plaçant le commutateur asservi (4 ; 34 ; 44) dans un second état ;
**caractérisé en ce que** le procédé comprend l'étape consistant à connecter l'ensemble de circuits de commande (5, 8, 9) au côté secondaire du commutateur asservi (4 ; 34 ; 44), si bien que l'ensemble de circuits de commande (5, 8, 9) est totalement déconnecté de la batterie (2) lorsque le commutateur asservi (4 ; 34 ; 44) est dans son second état.

9. Procédé selon la revendication 8, **caractérisé en ce que** le procédé comprend l'étape consistant à fournir un commutateur (16) conçu pour être manoeuvré manuellement, en parallèle avec le commutateur asservi (4 ; 34 ; 44).

10. Procédé selon la revendication 8, **caractérisé en ce que** le procédé comprend l'étape consistant à fournir une alimentation électrique à l'ensemble de circuits de commande (5, 8, 9) à partir d'un accumulateur électrique de secours (22) lorsque le commutateur asservi (4 ; 34 ; 44) est dans son second état.

11. Procédé selon l'une quelconque des revendications 8 à 10, **caractérisé en ce que** le procédé comprend l'étape consistant à surveiller la tension de la batterie et à commuter ledit commutateur asservi (4 ; 34 ; 44) dans son second état lorsqu'est détectée une tension inférieure à une valeur de référence prédéfinie.
